# FASCICULE DE BREVET EUROPEEN

(11) **EP 3 222 528 B1**
(45) Date de publication et mention de la délivrance du brevet: **24.06.2020**
(21) Numéro de dépôt: 17162215.2
(22) Date de dépôt: 22.03.2017
(51) Int. Cl.: B64D 47/04, F21V 5/02, F21V 7/00

(54) **PROJECTEUR HYBRIDE POUR AÉRONEF**
HYBRIDSCHEINWERFER FÜR LUFTFAHRZEUG
HYBRID PROJECTOR FOR AIRCRAFT

(30) Priorité: 24.03.2016 FR 1652556
(43) Date de publication de la demande: 27.09.2017
(73) Titulaire: Zodiac Aero Electric, 93100 Montreuil (FR)
(72) Inventeur: TSAO, Christian, 93110 Rosny-sous-Bois (FR)
(74) Mandataire: Casalonga

(56) Documents cités:
- FR-A1- 3 025 285
- FR-A1- 3 025 289
- US-A1- 2009 097 248

## Description

La présente invention concerne, de manière générale, un système d'éclairage embarqué pour aéronef et se rapporte plus particulièrement à un collimateur pour projecteur d'aéronef.

Un système d'éclairage d'aéronef comprend généralement plusieurs dispositifs d'éclairage qui sont activés en fonction de phases de vol ou de roulage de l'aéronef.

Un aéronef comprend ainsi en général des feux d'atterrissage disposés sur les ailes et destinés à l'éclairage de la piste d'atterrissage lorsque l'avion est en approche de la piste ou lors du décollage, un feu anticollision clignotant monté sur le haut de l'aileron arrière, et des feux de navigation montés sur l'extrémité de chaque aile.

Le système d'éclairage comprend également des dispositifs d'éclairage montés sur la jambe de train avant de l'aéronef pour éclairer la voie sur laquelle l'aéronef circule lorsqu'il se déplace au sol, généralement désignés par les anglo-saxons par « taxi lights », et des dispositifs d'éclairage complémentaires dénommés en anglais « Runway Turn-Off lights » (RTO) qui assurent un éclairage latéral, également lors du roulage.

Les dispositifs d'éclairage de piste de type « taxi » sont généralement montés sur le train avant de l'aéronef pour assurer essentiellement un éclairage vers l'avant de l'appareil, tandis que les dispositifs d'éclairage de type « Runway Turn-Off » sont généralement montés sur le train avant ou sur l'avant des ailes en étant orientés de part et d'autre de l'avant de l'aéronef à des angles compris environ entre 35° et 55 ° de manière à éclairer les phases de virages et améliorer ainsi la visibilité dans les virages.

Les projecteurs de roulage de type « taxi light » et de virage de type « Runway Turn-Off » sont ainsi activés lors du roulage pour éclairer les voies de circulation « taxi way » pour quitter ou accéder à une piste. Lors de ces phases, l'éclairage est caractérisé par une distribution lumineuse fortement étalée horizontalement afin d'identifier un obstacle aux abords de l'aéronef, principalement devant le cockpit et devant les ailes. Ce faisceau doit rester concentré verticalement et être rabattu vers le sol pour minimiser les risques d'éblouissement des personnels de piste croisant le faisceau.

Dans l'état de la technique, les systèmes d'éclairage pour aéronef sont constitués par des ensembles distincts de dispositifs d'éclairage qui sont sélectivement activés durant les phases de vol ou de roulage.

Tel est en particulier le cas des projecteurs de roulage. Ces projecteurs peuvent toutefois être activés simultanément pour améliorer la visibilité.

Comme on le conçoit, la réalisation d'un système d'éclairage sous la forme de plusieurs dispositifs d'éclairage présente un certain nombre d'inconvénients, notamment relatifs au fait que le système d'éclairage présente, dans son ensemble, un encombrement et un poids relativement importants.

Tel est en particulier le cas des projecteurs de roulage de type « taxi » et « Runway Turn-Off ». Un collimateur qui montre les caractéristiques du préambule de la revendication 1 est divulgué dans le document DE 10 2015 114 692 A1.

Le but de l'invention est donc de permettre de combiner au sein d'un même projecteur d'éclairage plusieurs fonctions d'éclairage. Plus particulièrement, un but de l'invention est de réaliser au sein d'un même projecteur une fonction taxi et une fonction RTO et ce, sans augmentation de l'encombrement du projecteur.

L'invention a donc pour objet un collimateur pour projecteur d'aéronef selon la revendication 1.

Ainsi, un tel collimateur permet de dévier le faisceau émis par une source de lumière, sans perte du flux lumineux initial, puisque la dernière déviation de la propagation lumineuse issue du collimateur se produit sans être gênée par les sommets des prismes voisins, le faisceau restant, ainsi, collimaté parallèlement jusqu'à ce qu'il atteigne la surface d'une zone d'une glace striée du projecteur dans lequel le collimateur est monté, qui réalise l'étalement final du faisceau RTO.

Selon l'invention la surface de sortie comporte un ensemble de prismes à base triangulaire s'étendant parallèlement et formant des surfaces internes de réflexion totale des faisceaux lumineux.

Les prismes comprennent chacun deux faces prismatiques délimitant entre elles un angle de déviation du faisceau compris entre 45 et 55, de préférence égal à 52°.

Les prismes sont espacés d'une distance comprise entre 2 et 10 mm, de préférence de 5 mm.

Selon encore une autre caractéristique du collimateur selon l'invention, celui-ci comprend un corps comprenant trois lobes assurant la collimation d'un faisceau lumineux issus de trois sources lumineuses respectives et ayant une surface de sortie de lumière commune.

De préférence, le corps comprend un ensemble de pieds de fixation et de centrage s'étendant à partir de la surface d'entrée et un ensemble de logements de réception d'une diode électroluminescente.

L'invention a également pour objet, selon un second aspect, un projecteur d'aéronef comprenant un ensemble de sources lumineuses à diodes électroluminescentes et un ensemble de collimateurs pour collimater un faisceau lumineux émis par les sources lumineuses, ledit ensemble de collimateurs comprenant des collimateurs d'étalement de lumière tels que définis ci-dessus.

On peut par exemple prévoir que le projecteur comprennent un premier ensemble de collimateurs délivrant en sortie des faisceaux parallèles de lumière collimatée et un deuxième ensemble de collimateurs d'étalement de lumière, les premier et deuxième ensembles de collimateurs étant montés dans des zones respectives du projecteur et étant activés en fonction de phases de vol et/ou de roulage de l'aéronef.

Avantageusement, on prévoira en outre que le projecteur comprenne une glace comportant une zone striée s'étendant en regard des collimateurs déviateurs du côté de la surface de sortie de lumière.

D'autres buts, caractéristiques et avantages de l'invention apparaîtront à la lecture de la description suivante, donnée uniquement à titre d'exemple non limitatif, et faite en référence aux dessins annexés sur lesquels :
- les figures 1 et 2 sont respectivement des vues en perspective et de dessus d'un collimateur d'un projecteur pour aéronef conforme à l'invention ;
- les figures 3 et 4 sont des vues latérales du collimateur des figures 2 et 3 selon deux orientations différentes ;
- les figures 5a et 5b, d'une part et 6a et 6b, d'autre part, illustrent le principe d'élaboration d'un faisceau RTO, et montrent l'étalement du faisceau selon une direction oblique orientée vers la gauche et vers la droite, respectivement ;
- la figure 7 est une vue en perspective d'un projecteur doté d'un collimateur conforme à l'invention ;
- la figure 8 montre une glace montée en regard de la surface de sortie de lumière des collimateurs ; et
- la figure 9 montre les faisceaux lumineux obtenus au moyen d'un projecteur de la figure 7.

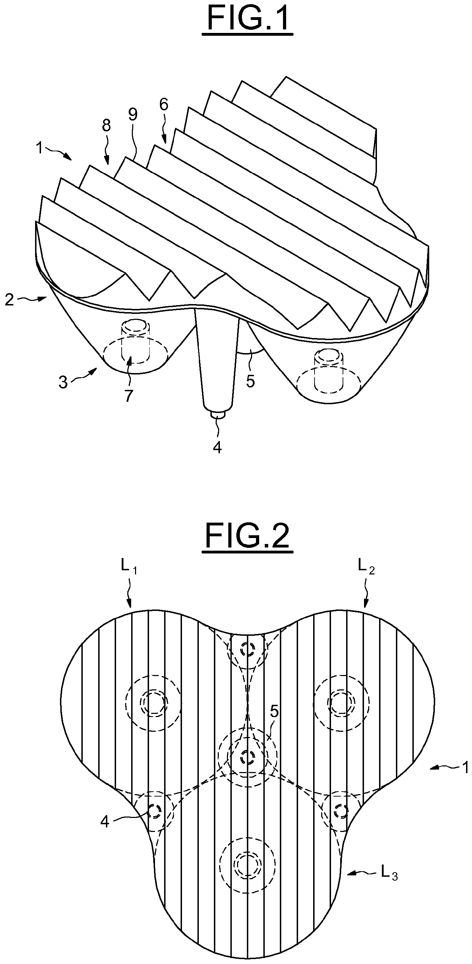

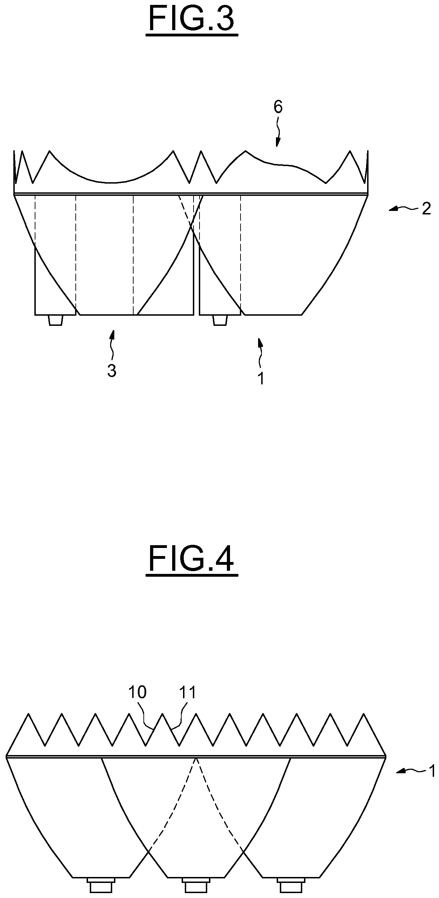

On se référera tout d'abord aux figures 1 à 4 qui montrent l'architecture générale d'un collimateur conforme à l'invention, désigné par la référence numérique générale 1.

Ce collimateur est destiné à être monté dans un projecteur d'éclairage extérieur d'aéronef pour assurer les fonctions d'éclairage de piste de type « taxi » et « runway turn-off ».

Comme on le voit, le collimateur comporte ici une structure à trois lobes, L1, L2, L3 assurant respectivement la collimation de faisceaux lumineux issus de diodes électroluminescentes (non représentées).

Le collimateur 1 comporte un corps 2 réalisé en une seule pièce, par moulage d'une matière plastique, avantageusement du polycarbonate et comporte une face postérieure 3 par laquelle le collimateur vient se monter sur un circuit portant des LEDs par l'intermédiaire de pieds 4 et 5 de fixation et de centrage et une face antérieure opposée 6 délimitant une surface de sortie de lumière commune pour l'ensemble des lobes L1, L2 et L3.

Comme on le voit, la face postérieure 3 de chaque lobe L1, L2 et L3 comporte un logement 7 dans lequel vient se loger une diode électroluminescente. La surface périphérique et la surface de fond du logement constituent ainsi une surface d'entrée de lumière dans le collimateur qui assure la collimation des faisceaux lumineux délivrés par les diodes et la transmission de la lumière sous la forme de faisceaux parallèles de lumière collimatée jusqu'à la surface de sortie du collimateur formée par la face antérieure 6.

Comme on le voit, la face antérieure 6 du collimateur comporte un ensemble de stries parallèles, telles que 8, de manière à former un ensemble de prismes 9 à base triangulaire qui s'étendent selon une direction du collimateur perpendiculaire à une direction d'étalement d'un faisceau.

Chaque prisme 9 comporte deux faces 10 et 11 qui forment entre elles un angle prismatique choisi en fonction de la déviation ou de l'orientation du faisceau à obtenir.

On pourra à cet égard prévoir que les faces prismatiques 10 et 11 forment un angle compris entre 45° et 55°. De préférence, on utilisera un angle prismatique de 52° de manière à obtenir un pic d'intensité dans une direction oblique par rapport à l'axe géométrique du collimateur.

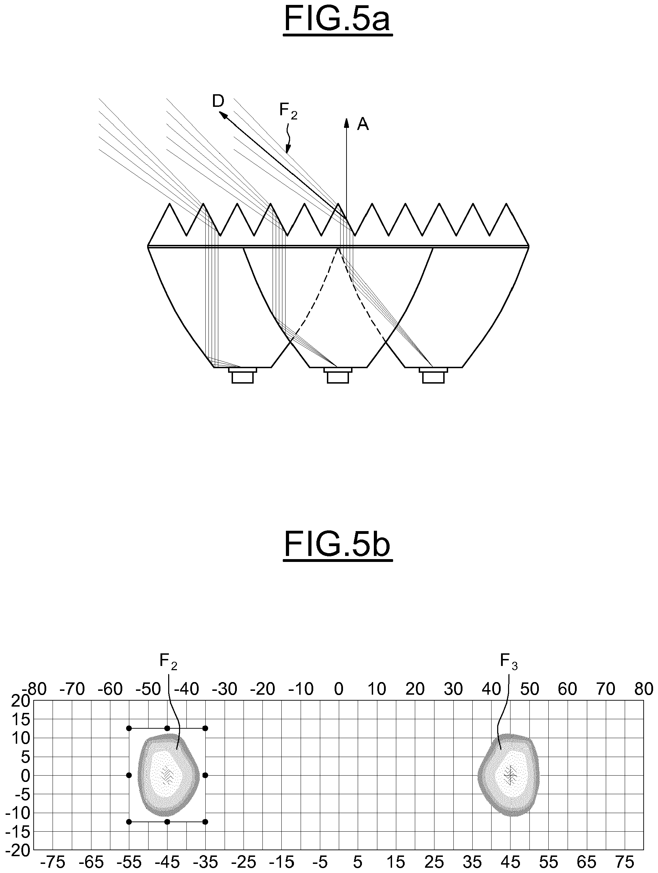

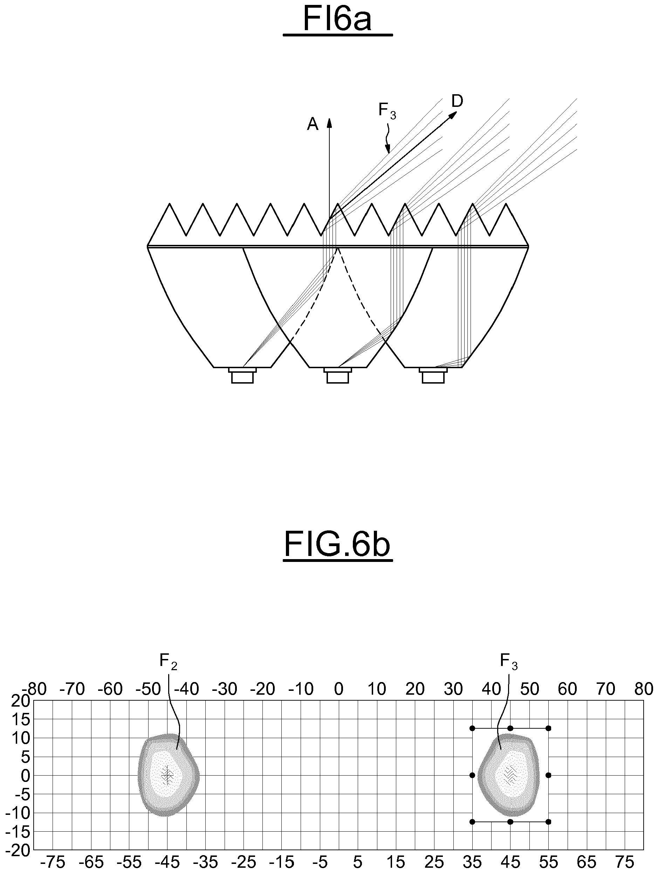

En se référant aux figures 5a et 5b, d'une part et 6a et 6b, d'autre part, on voit que les faces prismatiques 10 et 11 permettent de diriger les faisceaux selon une direction oblique D par rapport à l'axe géométrique A du collimateur et d'orienter le faisceau respectivement à gauche (figures 5a et 5b) et à droite (figures 6a et 6b).

On notera que, de préférence, on espacera les prismes d'une distance comprise entre 2 et 10 mm. Il a toutefois été constaté qu'une distance de 5 mm entre les prismes permettait d'obtenir un étalement et un rendement lumineux suffisants.

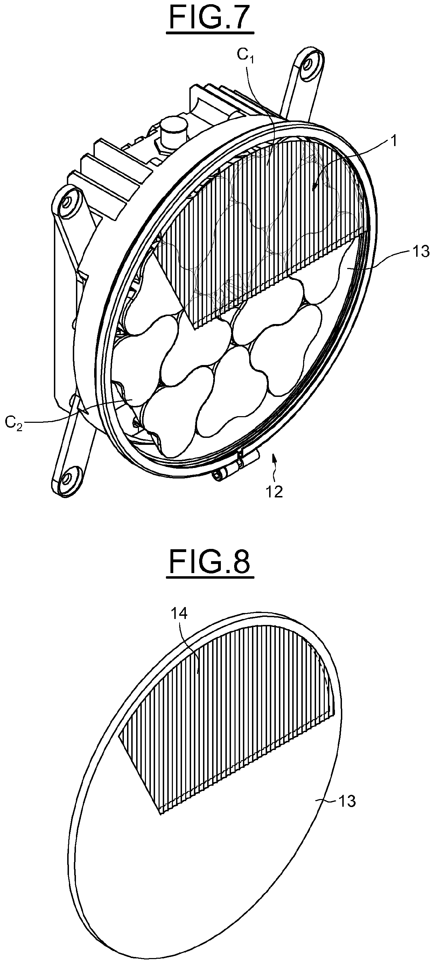

On a représenté sur les figures 7 et 8 un projecteur hybride 12 pour aéronef capable d'assurer les fonctions d'éclairage de piste de type taxi et RTO.

Comme on le voit, un tel projecteur comprend un ensemble de sources lumineuses comprenant chacune une diode électroluminescente associée à un collimateur de mise en forme du faisceau émis par la diode.

Le projecteur hybride comprend des collimateurs C1 d'orientation de la lumière, tels que décrits précédemment en référence aux figures 1 à 4, et des collimateurs C2 aptes à collimater le faisceau lumineux issus de diodes électroluminescentes sous la forme de faisceaux parallèles, dans des zones respectives du projecteur. Une glace 13 comprenant une zone striée 14 vient se positionner en regard des surfaces de sortie de lumière des diodes de sorte que la zone striée 14 soit positionnée en regard des collimateurs C1 d'orientation. La zone striée 14 de cette glace 13 a pour fonction l'étalement des deux faisceaux F2 et F3 de la fonction RTO.

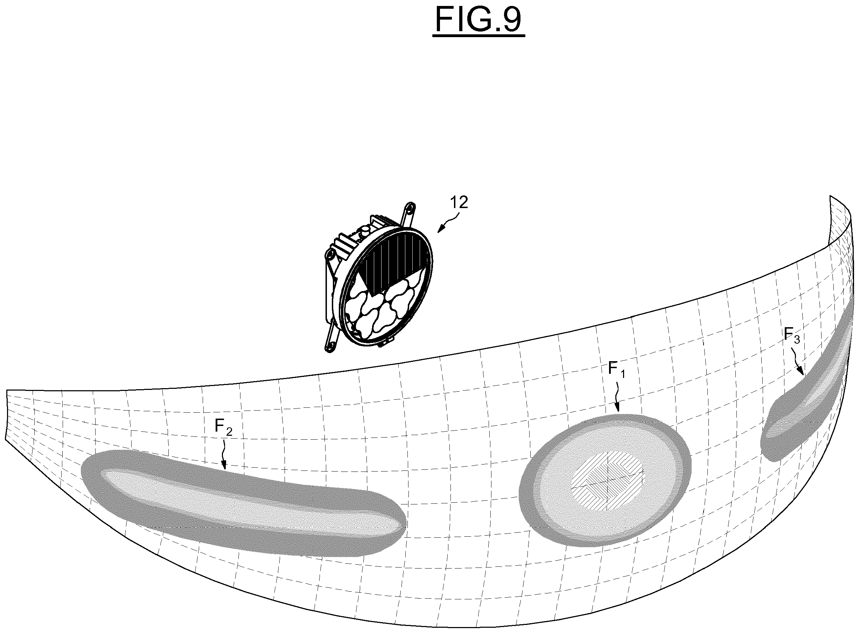

Comme le montre la figure 9, grâce à cet agencement, le projecteur est capable de fournir un premier faisceau F1 en mettant en œuvre les diodes associées aux collimateurs C2 et des faisceaux F2 et F3 étalés en mettant en œuvre les diodes associées aux collimateurs d'étalement C1.

Il est possible d'activer simultanément les diverses zones du projecteur pour obtenir les trois faisceaux F1, F2 ou F3, ou d'activer les zones sélectivement pour obtenir une fonction d'éclairage taxi (faisceau F1) ou une fonction d'éclairage RTO (faisceaux F2 et F3).

Un projecteur hybride conforme à l'invention peut par exemple être réalisé en utilisant 6 triples collimateurs C1 d'étalement de lumière associés chacun à 3 LED et un ensemble de 6 triples collimateurs C2 également associés chacun à 3 diodes électroluminescentes, et peut dès lors comprendre 36 diodes électroluminescentes, et ce dans un encombrement conventionnel.

On notera à cet égard que la taille des projecteurs est généralement désignée par le nombre de PAR, qui désigne le diamètre du projecteur en 8ème de pouce. Ainsi, la taille PAR 36 correspond à un diamètre de 4 pouces ½, soit 114 mm, PAR 46 correspond à un diamètre de 5 pouces ¾, soit 145 mm et PAR 64 correspond à un diamètre de 8 pouces, soit 203 mm.

Un projecteur hybride conforme à l'invention peut avantageusement être réalisé dans une taille PAR 64, et dès lors avoir un encombrement qui correspond à un projecteur de décollage conventionnel et remplacer, ainsi, avec une masse et un encombrement réduits trois projecteurs sur la jambe de train, à savoir un projecteur « Taxi Light « et deux projecteurs droite et gauche, de type Runway Turn-off Light.

## Revendications

1. Collimateur pour projecteur d'aéronef, comprenant une surface (3) d'entrée de lumière et une surface (6) de sortie de lumière, la surface de sortie comportant un ensemble de prismes (9) à base triangulaire s'étendant parallèlement et formant des surfaces internes (10, 11) de réflexion des faisceaux lumineux de manière à dévier un faisceau lumineux transmis entre la surface d'entrée et la surface de sortie de lumière en dirigeant le faisceau selon deux directions (D1, D2) obliques par rapport à un axe optique (A) du collimateur, **caractérisé en ce que** les prismes comprennent chacun deux faces prismatiques délimitant entre elles un angle compris entre 45° et 55°, et que les prismes (9) sont séparés d'une distance comprise entre 2 et 10 mm.

2. Collimateur selon la revendication 1, comprenant un corps (2) comportant trois lobes assurant la collimation de faisceaux lumineux issus de trois sources lumineuses respectives et ayant une surface (6) de sortie de lumière commune.

3. Collimateur selon la revendication 2, dans lequel le corps comprend un ensemble de pieds (4, 5) de fixation et de centrage s'étendant à partir de la surface d'entrée et un ensemble de logements (7) de réception d'une diode électroluminescente.

4. Projecteur d'aéronef comprenant un ensemble de sources lumineuses à diodes électroluminescentes et un ensemble de collimateurs pour collimater le faisceau émis par les sources lumineuses, **caractérisé en ce que** ledit ensemble de collimateurs comporte des collimateurs (1) selon l'une quelconque des revendications 1 à 3.

5. Projecteur selon la revendication 4, comprenant un premier ensemble de collimateurs (C2) délivrant en sortie des faisceaux parallèles de lumière collimatée et un deuxième ensemble de collimateurs (C1) d'orientation de lumière, les premier et deuxième ensembles de collimateurs étant montés dans des zones respectives du projecteur et étant activés en fonction de phases de vol et/ou de roulage de l'aéronef.

6. Projecteur selon la revendication 5, comprenant en outre une glace (13) comprenant une zone striée (14) s'étendant en regard des collimateurs d'orientation, qui a pour fonction l'étalement du faisceau RTO, du côté de la surface de sortie de lumière.

## Patentansprüche

1. Kollimator für Flugzeugscheinwerfer, der eine Lichteintrittsoberfläche (3) und eine Lichtaustrittsoberfläche (6) umfasst, wobei die Austrittsoberfläche eine Gesamtheit von Prismen (9) auf dreieckiger Basis enthält, die sich parallel erstrecken und innere Oberflächen (10, 11) für die Reflexion von Lichtstrahlenbündeln bilden, derart, dass ein zwischen der Lichteintritts- und der Lichtaustrittsoberfläche übertragenes Lichtstrahlenbündel abgelenkt wird, indem das Strahlenbündel in zwei Richtungen (D1, D2) gelenkt wird, die in Bezug auf eine optische Achse (A) des Kollimators schräg verlaufen,
**dadurch gekennzeichnet, dass**
die Prismen jeweils zwei Prismenflächen enthalten, die zwischen sich einen Winkel im Bereich von 45° und 55° begrenzen, und dass
die Prismen (9) um einen Abstand im Bereich von 2 bis 10 mm getrennt sind.

2. Kollimator nach Anspruch 1, der einen Körper (2) umfasst, der drei Keulen enthält, die die Kollimation von Lichtstrahlenbündeln, die von drei entsprechenden Lichtquellen ausgehen, sicherstellen und eine gemeinsame Lichtaustrittsoberfläche (6) besitzen.

3. Kollimator nach Anspruch 2, wobei der Körper eine Gesamtheit von Befestigungs- und Zentrierungsfüßen (4, 5) enthält, die sich ausgehend von der Eintrittsoberfläche erstrecken, und eine Gesamtheit von Aufnahmeräumen (7) für Leuchtdioden enthält.

4. Flugzeugscheinwerfer, der eine Gesamtheit von Leuchtdioden-Lichtquellen und eine Gesamtheit von Kollimatoren, um das von den Lichtquellen ausgesendete Strahlenbündel zu kollimieren, umfasst, **dadurch gekennzeichnet, dass** die Gesamtheit von Kollimatoren Kollimatoren (1) nach einem der Ansprüche 1 bis 3 enthält.

5. Scheinwerfer nach Anspruch 4, der eine erste Gesamtheit (C2) von Kollimatoren, die am Ausgang parallele Strahlenbündel von kollimiertem Licht liefern, und eine zweite Gesamtheit (C1) von Kollimatoren für die Lichtorientierung umfasst, wobei die erste und die zweite Gesamtheit von Kollimatoren in entsprechenden Zonen des Scheinwerfers montiert sind und in Abhängigkeit von der Flugphase und/oder der Rollphase des Flugzeugs aktiviert werden.

6. Scheinwerfer nach Anspruch 5, der außerdem ein Glas (13) umfasst, das eine geriefte Zone (14) aufweist, die sich gegenüber den Orientierungskollimatoren erstreckt und die Funktion der Erweiterung des Strahlenbündels RTO auf Seiten der Lichtaustrittsoberfläche hat.

## Claims

1. Beam shaper for an aircraft headlight, comprising a light input surface (3) and a light output surface (6), the output surface comprising a set of prisms (9) with triangular bases, extending in a parallel way and forming internal surfaces (10, 11) for reflection of the light beams so as to deflect a light beam transmitted between the light input surface and output surface by guiding the beam in two directions (D1, D2) which are oblique relative to an optical axis (A) of the beam shaper, **characterized in that** each of the prisms comprises two prismatic faces delimiting between them a beam deflection angle of between 45° and 55° and that the prisms (9) are separated by a distance of between 2 and 10 mm.

2. Beam shaper according to Claim 1, comprising a body (2) having three lobes for shaping light beams emitted from three respective light sources, these lobes having a common output surface (6).

3. Beam shaper according to Claim 2, wherein the body comprises a set of fixing and centring stems (4, 5) extending from the input surface and a set of housings (7) for receiving a light-emitting diode.

4. Aircraft headlight comprising a set of light sources having light-emitting diodes and a set of beam shapers for shaping the light beam emitted by the light sources, **characterized in that** said set of beam shapers comprises beam shapers (1) according to any of Claims 1 to 3.

5. Headlight according to Claim 4, comprising a first set of beam shapers (C2) delivering parallel beams of shaped light at their output and a second set of beam shapers (C1) for orientating the light, the first and second sets of beam shapers being mounted in respective areas of the headlight and being activated on the basis of flight and/or taxiing phases of the aircraft.

6. Headlight according to Claim 5, further comprising an outer lens (13) having a striated area (14), extending so as to face the orientating beam shapers and serving to spread the RTO beam, on the light output surface side.
